# EUROPÄISCHE PATENTSCHRIFT

(11) **EP 0 656 999 B1**
(45) Veröffentlichungstag und Bekanntmachung des Hinweises auf die Patenterteilung: **03.04.1996**
(21) Anmeldenummer: 93919223.3
(22) Anmeldetag: 30.08.1993
(51) Int. Cl.: F16D 3/60

(54) **HOMOKINETISCHE KUPPLUNG**
HOMOKINETIC COUPLING
ACCOUPLEMENT HOMOCINETIQUE

(30) Priorität: 31.08.1992 DE 4228495
(43) Veröffentlichungstag der Anmeldung: 14.06.1995
(73) Patentinhaber: Chivari, Ilie, F-59300 Valenciennes (FR)
(72) Erfinder: Chivari, Ilie, F-59300 Valenciennes (FR)
(74) Vertreter: Wolgast, Rudolf, Dipl.-Chem. Dr.
(86) Internationale Anmeldenummer: EP9302345
(87) Internationale Veröffentlichungsnummer: WO9405923

(56) Entgegenhaltungen:
- EP-A- 0 035 283
- WO-A-86/03563

## Beschreibung

### Technisches Gebiet

Die Erfindung betrifft eine homokinetische Kupplung zum Kuppeln umlaufender Teile, welche einen Winkel- und/oder Radialversatz zwischen den Umlaufachsen der Teile zuläßt, mit einer ersten und einer zweiten Kupplungshälfte und zwei Zwischengliedern zwischen den Kupplungshälften, welche mit den Kupplungshälften über Lenkeranordnungen verbunden sind, bei welcher jedes der Zwischenglieder über ein erstes Paar von diametral gegenüberliegenden, allseits beweglich an Lagerzapfen angelenkten Lenkern mit der ersten Kupplungshälfte und über ein zweites Paar von allseits beweglich an Lagerzapfen angelenkten Lenkern mit der zweiten Kupplungshälfte verbunden ist, wobei jeweils der Lagerzapfen eine Lenkers des einen Paares mit dem Lagerzapfen des Lenkers des anderen Paares fluchtet, bei welcher die beiden Zwischenglieder gekreuzt zueinander angeordnet und über eine Zentrierkugel aneinander zentriert sind und bei welcher zwischen den beiden Zwischengliedern Zugfedermittel wirksam sind, durch welche beide Zwischenglieder in Anlage an der Zentrierkugel gehalten werden.

### Zugrundeliegender Stand der Technik

Eine solche Kupplung ist bekannt durch die EP-B-0 035 283 oder die US-A-4,588,388. Bei der bekannten Kupplung sind die Lenker über Gummilager an den Lagerzapfen der Zwischenglieder angelenkt. Solche Gummilager sind aufwendig und erfordern erheblichen Raum. Es ist aus diesen Druckschriften auch bekannt, zwei Zwischenglieder durch Zugfedern seitlich von der Zentrierkugel gegeneinander und gegen die dazwischenliegende Zentrierkugel vorzuspannen. Es ist dort bei einem anderen Ausführungsbeispiel auch bekannt, die Zentrierkugel mit einer Querbohrung zu versehen. Durch diese Querbohrung ist eine Welle geführt.

### Offenbarung der Erfindung

Der Erfindung liegt die Aufgabe zugrunde, eine Kupplung der eingangs genannten Art konstruktiv einfach und raumsparend aufzubauen. Durch diese konstruktive Gestaltung sollen für die Kupplung andere Anwendungen erschlossen werden, die mit den in den genannten Druckschriften genannten Konstruktionen nicht erfaßt werden können. Beispiele hierfür sind Anwendungen, bei denen derzeit überwiegend Zahnkupplungen eingesetzt werden.

Erfindungsgemäß wird diese Aufgabe dadurch gelöst, daß
(a) die Zentrierkugel eine Querbohrung aufweist,
(b) die Zugfedermittel von einer Zugfeder gebildet sind, die sich durch die Querbohrung erstreckt und auf einer Seite mit dem einen und auf der entgegengesetzten Seite mit dem anderen Zwischenglied verbunden ist und
(c) die Lenker an den Lagerzapfen über metallische Gelenklager angelenkt sind.

Die Zwischenglieder werden dann in einfacher und raumsparender Weise in Anlage an der Zentrierkugel gehalten. Die metallischen Gelenklager sind preisgünstig und raumsparend.

Verschleißbedingte Lose in den Gelenklagern, die sich bemerkbar machen könnte, wenn kein Drehmoment übertragen wird, kann dadurch aufgenommen werden, daß
(a) auf den zwischengliedseitigen Lagerzapfen und den zugehörigen kupplungshälftenseitigen Lagerzapfen mit einer Umfangsnut versehene Rollen sitzen, wobei die Umfangsnuten jeweils in einer Ebene liegen, und
(b) in den Umfangsnuten jedes Paares von Rollen eine geschlossene Federdrahtschleife geführt ist.

Bei der vorliegenden Kupplung ist der Abstand der Rollen bei allen Betriebszuständen der Kupplung im wesentlichen gleich der Länge der Lenker und damit konstant. Die Federdrahtschleife wird daher nicht gedehnt sondern allenfalls seitlich durchgebogen. Durch die Federdrahtschleife werden die Lagerzapfen von Zwischenglied und Kupplungshälfte gegeneinander vorgespannt. Dadurch wird auch eventuelle Lose aus den Gelenklagern herausgenommen.

Die Kupplung kann als geschlossene Baugruppe ausgeführt werden, indem
(a) die beiden Kupplungshälften je einen Nabenteil und einen schalenförmigen Gehäuseteil aufweisen,
(b) die beiden schalenförmigen Gehäuseteile über eine flexible Manschette miteinander verbunden sind und mit der Manschette ein die Zwischenglieder umgebendes Gehäuse bilden.

Dabei kann das Gehäuse wenigstens teilweise mit einem flüssigen Schmiermittel gefüllt sein. Ein solches Schmiermittel schmiert sowohl die metallischen Gelenklager als auch die Zentrierkugel und die konkav-sphärischen Anlageflächen der Zwischenglieder.

Eine Verkleinerung der Kupplung und ihres Gehäuses hinsichtlich ihrer axialen Abmessungen kann dadurch erreicht werden, daß
(a) die auf fluchtenden Lagerzapfen der Zwischenglieder angelenkten Lenker sich jeweils nach entgegengesetzten Richtungen erstrecken und
(b) die zugehörigen kupplungshälftenseitigen Lagerzapfen der ersten bzw. der zweiten Kupplungshälfte dementsprechend in Umfangsrichtung versetzt aber sich in Axialrichtung überlappend angeordnet sind.

Um unter diesen Umständen bei einem Radialversatz der zu kuppelnden Teile gleiche Winkelbewegungen der mit der ersten und der zweiten Kupplungshälfte verbundenen Lenker zu erreichen, ist es zweckmäßig, wenn die zwischengliedseitigen Lagerzapfen auf einem Teilkreis angeordnet sind, dessen Durchmesser kleiner ist als der Durchmesser des Teilkreises, auf dem die kupplungshälftenseitigen Lagerzapfen angeordnet sind.

Ausgestaltungen der Erfindung sind Gegenstand weiterer Unteransprüche.

### Kurze Beschreibung der Zeichnungen

Ausführungsbeispiele der Erfindung sind nachstehend unter Bezugnahme auf die zugehörigen Zeichnungen näher erläutert.
- Fig.1: zeigt einen Längsschnitt einer homokinetischen Kupplung längs der Linie E - F von Fig.2.
- Fig.2: zeigt einen Schnitt längs der Linie C - D von Fig.1.
- Fig.3: zeigt in einem Schnitt ähnlich Fig.2 eine abgewandelte Ausführung der Kupplung.
- Fig.4: zeigt in einem Schnitt ähnlich Fig.2 eine weitere Abwandlung der Kupplung.

### Bevorzugte Ausführungen der Erfindung

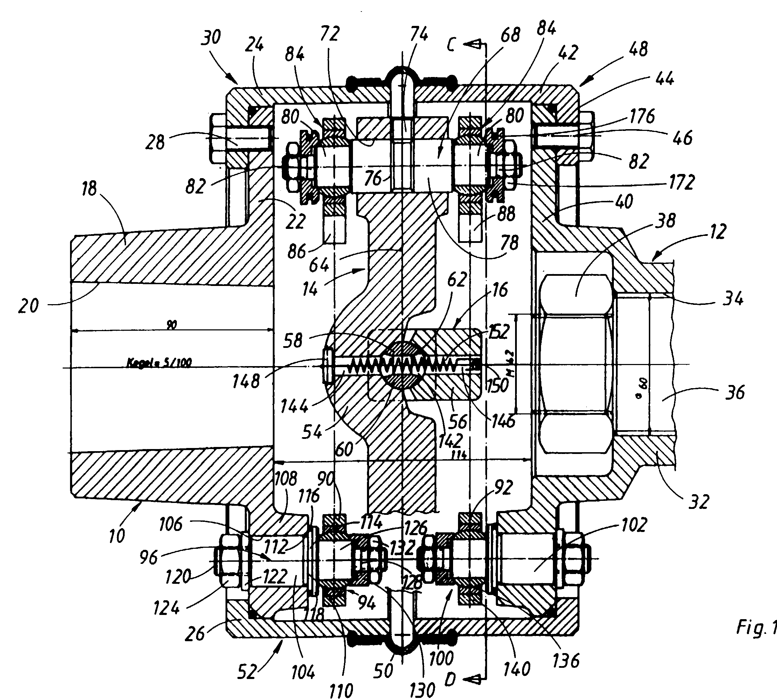

In Fig.1 ist mit 10 eine erste Kupplungshälfte und mit 12 eine zweite Kupplungshälfte bezeichnet. Zwischen den beiden Kupplungshälften 10 und 12 sind zwei Zwischenglieder 14 und 16 angeordnet. Die Kupplungshälfte 10 weist einen Nabenteil 18 mit einem schwach konischen Durchbruch 20 auf. Der Nabenteil 18 ist mit diesem Durchbruch 20 auf ein (nicht dargestelltes), entsprechend geformtes, umlaufendes Teil aufgesetzt. Der Nabenteil 18 weist einen Flansch 22 auf. Ein zylindrischer Ring 24 mit einem nach innen vorstehenden Rand 26 umgibt den Flansch 22. Der Ring 24 ist durch Schrauben 28, die durch den Rand 26 geführt sind, mit dem Flansch 22 verbunden. Der Flansch 22 und der Ring 24 bilden einen ersten schalenförmigen, zu der Kupplungshälfte 12 hin offenen Gehäuseteil 30. Die Kupplungshälfte 12 weist einen Nabenteil 32 auf. Der Nabenteil 32 ist mit einem Gewinde 34 auf ein mit einem entsprechenden Gewinde versehenes, umlaufendes Teil 36 aufgeschraubt. Das Teil 36 ist durch eine Kontermutter 38 in dem Nabenteil gesichert. Der Nabenteil 32 weist einen Flansch 40 auf. Ein zylindrischer Ring 42 ähnlich dem Ring 24 mit einem nach innen vorstehenden Rand 44 umgibt den Flansch 40. Der Ring 42 ist durch Schrauben 46, die durch den Rand 44 geführt sind, mit dem Flansch 40 verbunden. Der Ring 42 hat den gleichen Durchmesser wie der Ring 24. Der Flansch 40 und der Ring 42 bilden einen zweiten, schalenförmigen Gehäuseteil 48, der zu der ersten Kupplungshälfte 10 hin offen ist. Die beiden schalenförmigen Gehäuseteile 30 und 48 sind längs ihrer benachbarten Ränder durch eine flexible Manschette 50 aus Gummi oder elastomerem Kunststoff verbunden. Die Manschette 50 gestattet einen Winkelversatz zwischen den Achsen der Kupplungshälften 10 und 12. Die Manschette 50 gestattet auch einen Radialversatz zwischen den Achsen der Kupplungshälften 10 und 12. Die Kupplungshälften 10 und 12 mit den zugehörigen zu kuppelnden Teilen und die Manschette 50 bilden auf diese Weise ein abgeschlossenes Gehäuse 52.

In dem Gehäuse 52 sind die beiden Zwischenglieder 14 und 16 angeordnet.

Das Zwischenglied 14 ist ein langgestreckter Körper, der in der Mitte eine Kröpfung 54 bildet. Das Zwischenglied 16 ist ein entsprechender langgestreckter Körper mit einer Kröpfung 56 in der Mitte. Die beiden Zwischenglieder 14 und 16 sind gekreuzt zueinander angeordnet. Die Zwischenglieder 14 und 16 liegen in einer Ebene, wobei die Kröpfungen 54 und 56 umeinandergreifen. Zwischen den Zwischengliedern 14 und 16 ist eine Zentrierkugel 58 angeordnet. Die Zwischenglieder 14 und 16 weisen auf den Innenseiten der Kröpfungen 54 bzw. 56 konkav-sphärische Lagerflächen 60 bzw. 62 auf. Diese Lagerflächen 60 und 62 sind im wesentlichen komplementär zu der Zentrierkugel 58 und liegen an der Zentrierkugel 58 an. Zwischen den Zwischengliedern 14 und 16 ist soviel spiel, daß sich die Zwischenglieder 14 und 16 gegeneinander sowohl in Umfangsrichtung, d.h. um die Umlaufachse, als auch um ihre radialen Längsachsen 64 bzw. 66 begrenzt verdrehen können.

Das Zwischenglied 14 weist ein Paar von diametral einander gegenüberliegenden Lagerzapfen 68 und 70 auf. In Fig.1 ist davon nur der Lagerzapfen 68 sichtbar. Der Lagerzapfen 70 ist in übereinstimmender Weise ausgeführt. Der Lagerzapfen 68 erstreckt sich symmetrisch zu einer Radialmittelebene durch eine Axialbohrung 72 des Zwischengliedes 14. Der Lagerzapfen 68 ist in der Axialbohrung 72 durch eine Innensechskantschraube 74 gesichert, die in einer Längsbohrung des Zwischengliedes 14 und einer Querbohrung 76 des Lagerzapfens 68 geführt ist. Der Lagerzapfen 68 weist einen zylindrischen Mittelteil 78 auf, der in der Axialbohrung 72 sitzt. An den Mittelteil 78 schließen sich zu beiden Seiten Lagerabschnitte 80 von vermindertem Durchmesser an. An die Lagerabschnitte 80 schließen sich dann mit einem Geweinde versehene Abschnitte 82 von weiter vermindertem Durchmesser an. Auf den Lagerabschnitten 80 sitzen Gelenklager 84 zur allseits beweglichen Anlenkung von Lenkern 86 bzw. 88 und 90 bzw. 92 (Fig.1). Die Lenker 86 und 90 sind in entsprechender Weise über Gelenklager 94 (Fig.1) an Lagerzapfen 96 bzw. 98 der ersten Kupplungshälfte 10 angelenkt. Die Lenker 88 und 92 sind über Gelenklager an Lagerzapfen der zweiten Kupplungshälfte 12 angelenkt. Das ist in Fig.1 durch das Gelenklager 100 und den Lagerzapfen 102 für den Lenker 92 dargestellt. Die Anlenkung des Lenkers 88 ist in den Figuren nicht erkennbar. Diese Anlenkung erfolgt in gleicher Weise wie die des Lenkers 92. Der Lagerzapfen 96 enthält einen zylindrischen Abschnitt 104. Der Abschnitt 104 sitzt in einer Bohrung 106 in einem verdickten Teil 108 des Flansches 22. An den Abschnitt 104 schließt sich nach innen zu eine Umfangsnut 110 mit einem Dichtring 112 an. Der Dichtring 112 liegt an der Innenfläche der Bohrung 106 an. Auf die Umfangsnut 110 folgt nach innen zu ein Bund 114, der einen zweiten Dichtring 116 trägt, und ein Bund 118 von größerem Durchmesser, an dem der Dichtring 116 axial abgestützt ist. Der Dichtring 116 liegt an der inneren Stirnfläche der Verdickung 108 an. Auf der Außenseite weist der Lagerzapfen 96 einen mit Gewinde versehenen Abschnitt 120 auf. Auf dem Abschnitt 120 sitzen eine Unterlegscheibe 122 und eine Mutter 124. Die Unterlegscheibe 122 liegt auf der in Fig.1 linken Außenseite des Flansches 22 an. Die Mutter 124 zieht den Bund 118 mit dem Dichtring 116 gegen die innere Stirnfläche der Verdickung 108 fest. Aud diese Weise wird der Lagerzapfen 96 fest in dem Flansch 22 gehaltert. Gleichzeitig erfolgt eine Abdichtung des Inneren des Gehäuses 52. An dem inneren Ende hat der Lagerzapfen 96, ähnlich wie der Lagerzapfen 68 einen zylindrischen Lagerabschnitt 126 von vermindertem Durchmesser und einen mit Gewinde versehenen Abschnitt 128 von weiter vermindertem Durchmesser. Auf dem Lagerabschnitt 126 sitzt das Gelenklager 94 für den Lenker 90. Auf dem mit Gewinde versehenen Abschnitt sitzt ein Haltering 130 und eine Mutter 132.

In entsprechender Weise sind die anderen Lagerzapfen wie 102 an den Kupplungshälften 10 bzw. 12 ausgebildet und angebracht.

Nachstehend wird das auf dem Lagerzapfen 102 sitzende Gelenklager 100 für den Lenker 92 beschrieben. Die übrigen Gelenklager auf den Lagerzapfen der Kupplungshälften 10 und 12 und den Lagerzapfen der Zwischenglieder 14 und 16 sind in entsprechender Weise ausgebildet.

Das Gelenklager 100 enthält einen ersten Ring 136 aus Metall mit einer zylindrischen Bohrung und einer konvex-sphärischen Außenfläche. Der Ring 136 sitzt auf dem Lagerabschnitt des Lagerzapfens 102. Auf dem ersten Ring 136 sitzt ein zweiter Ring 138 ebenfalls aus Metall mit einer konkav-sphärischen Innenfläche komplementär zu der konvex-sphärischen Außenfläche des ersten Ringes 136 und einer zylindrischen Außenfläche. Der zweite Ring 138 sitzt mit seiner zylindrischen Außenfläche in einer Bohrung des Lenkers 92. Durch den Lenker 92 und den zweiten Ring 138 hindurch erstreckt sich eine Bohrung 140 bis zu der sphärischen Lagerfläche zwischen den Ringen 136 und 138. Über diese Bohrung kann ein flüssiges Schmiermittel, welches in den Innenraum des Gehäuses 52 eingefüllt wird, bis zu der sphärischen Lagerfläche zwischen den Ringen 136 und 138 gelangen.

Die Zentrierkugel 58 weist eine Querbohrung 142 auf. Die Querbohrung 142 verläuft diametral durch die Zentrierkugel 58. Die Querbohrung 142 erweitert sich an den Enden trichterförmig. In dem Zwischenstück 14 ist eine Bohrung 144 angebracht. Die Bohrung 144 fluchtet im wesentlichen mit der Querbohrung 142 der Zentrierkugel 58. In entsprechender Weise ist in dem Zwischenstück 16 eine Bohrung 146 angebracht. Die Bohrung 146 fluchtet ebenfalls mit der Querbohrung 142 der Zentrierkugel 58, wenn die Kupplungshälften 10 und 12 genau gleichachsig angeordnet sind. In der Bohrung 144 sitzt ein Querstift 148. Der Querstift 148 ist in einer Ausnehmung des Zwischenstücks 10 aufgenommen. Die Achse des Querstiftes 148 ist senkrecht zu der Achse der Bohrung 144. In entsprechender Weise sitzt in der Bohrung 146 ein Querstift 150. Der Querstift 150 ist in einer Ausnehmung des Zwischenstücks 12 aufgenommen. Die Achse des Querstifts 150 ist senkrecht zu der Achse der Bohrung 146 und gekreuzt zu der Achse des Querstiftes 148. An die beiden Querstifte 148 und 150 sind die beiden Enden einer vorgespannten Zugfeder 152 angehängt. Die Zugfeder 152 hält die Querstifte 148 und 150 in den Ausnehmungen. Die Zugfeder 152 zieht die beiden Zwischenstücke 10 und 12 gegeneinander und hält sie in Anlage an der Zentrierkugel 58. Die Bohrungen 144 und 146 sorgen gleichzeitig für den Zutritt von Schmiermittel zu den sphärischen Anlageflächen zwischen den Zwischengliedern 10 und 12 und der Zentrierkugel 58.

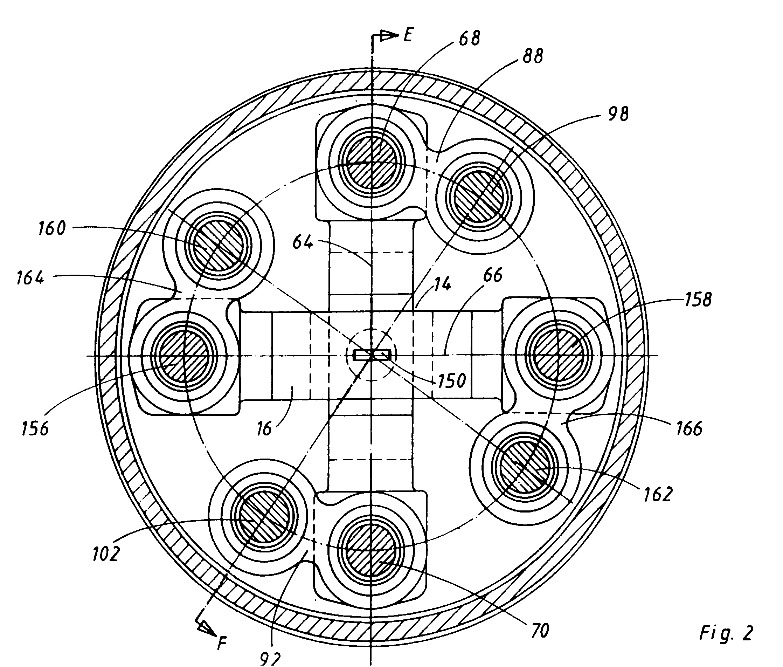

Auf die beschriebene Weise sind an dem Zwischenglied 14 zwei diametral gegenüberliegende Paare von Lenkern angelenkt. Die Lenker jedes Paares sind an fluchtenden Lagerzapfen (oder fluchtenden, entgegengesetzten Enden eines gemeinsamen Lagerzapfens) allseitig beweglich angelenkt. Bei der Ausführung nach Fig.1 und 2 erstrecken sich die Lenker von dem Zwischenglied weg alle in der gleichen Umfangsrichtung, nämlich im Uhrzeigersinn von Fig.2. Ein Lenker jedes Paares ist mit der ersten Kupplungshälfte 10 gelenkig verbunden. Der andere Lenker jedes Paares ist mit der zweiten Kupplungshälfte 12 gelenkig verbunden. In Fig.1 besteht ein Paar von Lenkern aus den Lenkern 86 und 88, von denen der Lenker 88 an einem Lagerzapfen 98 der Kupplungshälfte 12 angelenkt ist. Dieser Lagerzapfen ist in Fig.2 sichtbar. Der Lenker 86 ist an einem in den Figuren nicht sichtbaren Lagerzapfen der Kupplungshälfte 10 in entsprechender Weise angelenkt. Ein zweites Paar von Lenkern 90 und 92 ist an einem Lagerzapfen 70 (Fig.2) des Zwischengliedes 14 beiderseits dieses Zwischengliedes 14 angelenkt, so wie das oben in Fig.1 mit dem Lagerzapfen 68 gezeigt ist. Der Lenker 90 ist in der in Fig.1 dargestellten Weise an dem Lagerzapfen 96 der Kupplungshälfte 10 angelenkt. Der Lenker 92 ist in der ebenfalls in Fig.1 dargestellten Weise an dem Lagerzapfen 102 der zweiten Kupplungshälfte 12 angelenkt.

In entsprechender Weise sind an dem gekreuzt zu dem Zwischenglied 14 angeordneten Zwischenglied 16 zwei diametral gegenüberliegende Paare von Lenkern an Lagerzapfen angelenkt. Ein Lenker jedes Paares ist außerdem an einem Zapfen der ersten Kupplungshälfte 10 angelenkt. Der andere Lenker jedes Paares ist an einem Zapfen der zweiten Kupplungshälfte 12 angelenkt. Der Aufbau ist der gleiche wie er im Zusammenhang mit dem Zwischenglied 14 beschrieben und in Fig.1 dargestellt ist. Die Lenkeranordnung des Zwischengliedes 16 ist in Fig.1 nicht sichtbar. In Fig.2 sieht man die zwischengliedseitigen Lagerzapfen 156 und 158 und die Lagerzapfen 160 und 162 auf der Seite der zweiten Kupplungshälfte 12. Der Lagerzapfen 156 ist über einen Lenker 164 mit dem Lagerzapfen 160 verbunden. Der Lagerzapfen 158 ist über einen Lenker 166 mit dem Lagerzapfen 162 verbunden (Fig.2). Auf der Seite der ersten Kupplungshälfte 10 ist die Lenkeranordnung die gleiche.

Die Wirkungsweise der beschriebenen Kupplung ist folgende:

Bei einem Winkelversatz der Antriebs- und Abtriebswelle, wenn also z.B. die Achse der Kupplungshälfte 12 gegenüber der Achse der Kupplungshälfte 10 um den Mittelpunkt der Kugel 58 im Uhrzeigersinn in der Papierebene von Fig.1 abgeknickt ist, dann werden die kupplungshälftenseitigen Enden der Lenker jeweils oben in Fig.1 etwas auseinandergezogen und unten in Fig.1 etwas zusammengedrückt. Die Lenker werden dabei sowohl gegenüber den Zwischengliedern 14 und 16 als auch gegenüber den Kupplungshälften 10 und 12 verschwenkt. In der Axialprojektion werden die Lenker dadurch scheinbar verkürzt. Diese scheinbare Verkürzung der Lenker wird ausgeglichen durch eine überlagerte hin- und hergehende Schwenkbewegung des jeweiligen Zwischengliedes um die Drehachse. Dadurch wird ein Winkelversatz der Achsen ermöglicht, ohne daß Schwankungen der abtriebseitigen Winkelgeschwindigkeit auftritt. Die Kupplung ist auch bei Winkelversatz homokinetisch.

Wenn die Achsen der Kupplungshälften 10 und 12 und damit der zu kuppelnden, umlaufenden Teile radial gegeneinander Versetzt sind, also etwa die Achse der Kupplungshälfte 12 gegenüber der Achse der Kupplungshälfte 10 in der Papierebene von Fig.1 parallel nach oben versetzt ist, dann führen die Lenker während jedes Umlaufes eine hin- und hergehende Schwenkbewegung um eine zur Antriebsachse parallele Achse aus.

Das führt in einer radialen Projektion ebenfalls zu einer scheinbaren Verkürzung der Lenker. Diese scheinbare Verkürzung wird dann ausgeglichen durch eine hin- und hergehende Schwenkbewegung der Zwischenglieder 14 und 16 um ihre radiale Längsachse 64 bzw. 66. Dadurch wird auch bei einem radialen Versatz der Umlaufachsen eine winkeltreue Übertragung der Drehbewegung erreicht. Die Kupplung ist auch bei einem Radialversatz homokinetisch.

Durch die Verwendung zweier gekreuzter Zwischenglieder 14 und 16, die an einer Zentrierkugel 58 zentriert sind, werden beide Zwischenglieder 14 und 16 stets zentriert im Gehäuse 52 gehalten. Das gilt auch, wenn kein nennenswertes Drehmoment übertragen wird und bei hohen Drehzahlen Fliehkräfte wirksam sind. Es bedarf keiner rückstellenden und zentrierenden Wirkung von Gummilagern, wie sie beim Stand der Technik (US-A-4,588,388) vorgesehen sind. Die Anordnung und Ausbildung der Zwischenglieder und der Zentrierkugel ist so, daß die Zwischenglieder 14 und 16 die geschilderten Ausgleichsbewegungen ausführen können ohne sich gegenseitig zu stören. Der Winkel- und Radialversatz ist üblicherweise nur gering.

Die beschriebene Kupplung kann in verschiedener Weise abgewandelt und weitergebildet werden.

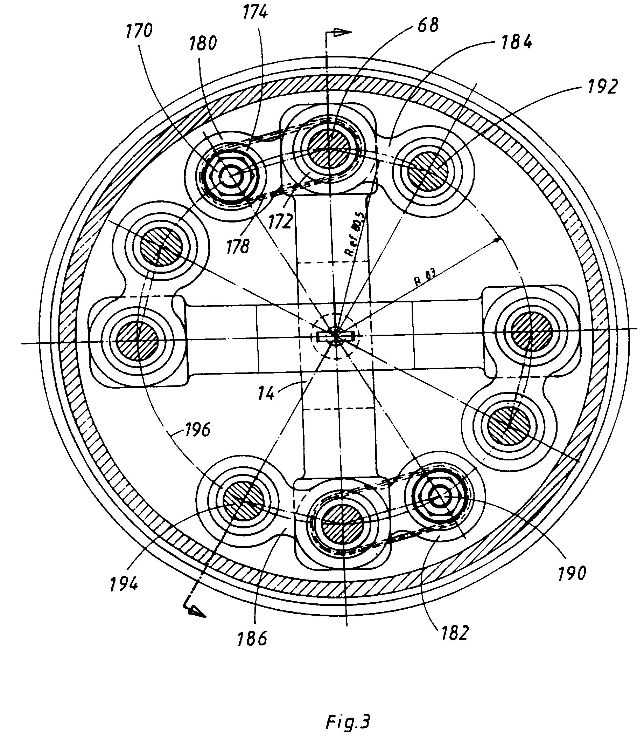

Durch Verschleiß kann in den Gelenklagern eine Lose auftreten. Um solche Lose aufzunehmen, sind auf den Lagerzapfen 68 an den Zwischengliedern und 170 an den Kupplungshälften, in Fig.3 an der Kupplungshälfte 10, Rollen 172 bzw. 174 angeordnet. Die Rollen 172 und 174 weisen Umfangsnuten 176 auf. In diesen Umfangsnuten ist eine geschlossene Federdrahtschleife 178 angeordnet. Bei der vorliegenden Kupplung ist der Abstand der Rollen bei allen Betriebszuständen der Kupplung im wesentlichen gleich der Länge der Lenker und damit konstant. Die Federdrahtschleife wird daher nicht gedehnt sondern allenfalls seitlich durchgebogen. Durch die Federdrahtschleife werden die Lagerzapfen von Zwischenglied und Kupplungshälfte gegeneinander vorgespannt. Dadurch wird auch eventuelle Lose aus den Gelenklagern herausgenommen.

Bei der Anordnung nach Fig.2 erstrecken sich die Lenker von den Zwischengliedern aus stets in der gleichen Richtung, nämlich im Uhrzeigersinn von Fig.2. Das hat zur Folge, daß sich die Lagerzapfen, z.B. 96 und 102 gleichachsig gegenüberstehen. Das wiederum bedingt bestimmte, relativ große axiale Abmessungen des Gehäuses 52. Fig.3 zeigt an den Lenkern des Zwischengliedes eine Anordnung, welche eine axiale Verkürzung der Kupplung gestattet. Die zu der Kupplungshälfte 10 geführten Lenker 180 und 182 erstrecken sich von dem Zwischenglied aus entgegen dem Uhrzeigersinn in Fig.3. Die zu der Kupplungshälfte 12 geführten Lenker 184 und 186 erstrecken sich von dem Zwischenglied aus in entgegengesetzter Richtung, nämlich im Uhrzeigersinn von Fig.3. Dadurch sind auch die Lagerzapfen 170 und 190 an der Kupplungshälfte 10 gegen die zugehörigen Lagerzapfen 192 und 194 an der Kupplungshälfte 12 winkelversetzt. Auf diese Weise können die kupplungshälftenseitigen Lagerzapfen überlappend angeordnet sein. Der Lagerzapfen 170 kann sich an dem Lagerzapfen 192 vorbei in den Raum zwischen den Lagerzapfen 192 und 194 erstrecken. So wird eine axiale Verkürzung der Kupplung möglich.

Bei einer solchen Anordnung, wie sie in Fig.3 dargestellt ist, erfolgt ebenfalls eine homokinetische Übertragung von Drehbewegungen. Bei der Anordnung von Fig.3 liegen alle Lagerzapfen auf einem gemeinsamen Teilkreis 196. Die Lenker z.B. 182 und 186 bilden dadurch in Axialprojektion stumpfe Winkel miteinander. Bei einer solchen Anordnung sind die Schwenkwinkel der Lenker zwischen erster Kupplungshälfte und Zwischenglied und zwischen Zwischenglied und zweiter Kupplungshälfte unterschiedlich.

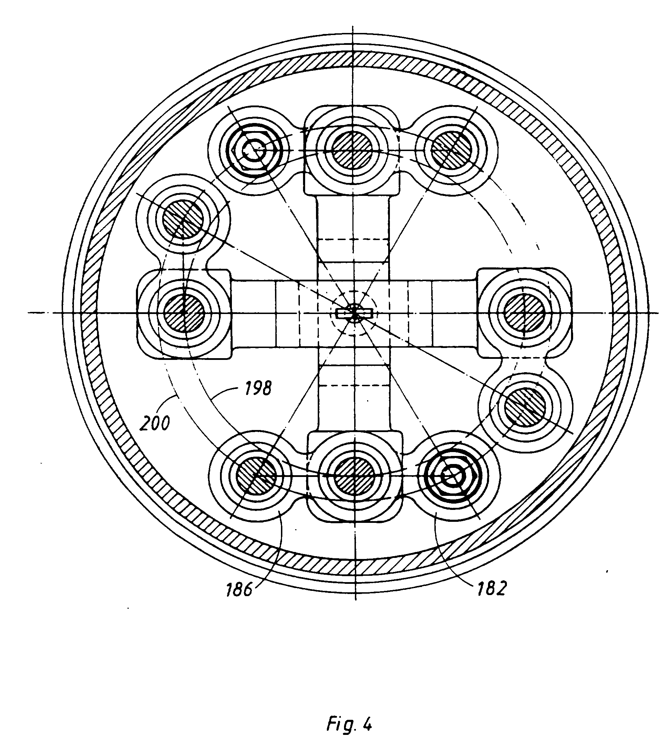

Fig. 4 Zeigt eine Anordnung, bei welcher die Schwenkwinkel der Lenker stets gleich sind. Zu diesem Zweck sind die Lagerzapfen an den Zwischengliedern auf einem ersten Teilkreis 198 und die Lagerzapfen an den Kupplungshälften auf einem zweiten Teilkreis 200 von grösserem Durchmesser angeordnet. Die Durchmesser der Teilkreise 198 und 200 sind dabei so gewählt, dass die sich nach entgegengesetzten Richtungen erstreckenden Lenker z.B. 182 und 186 in der Axialprojektion einen gestreckten Winkel bilden.

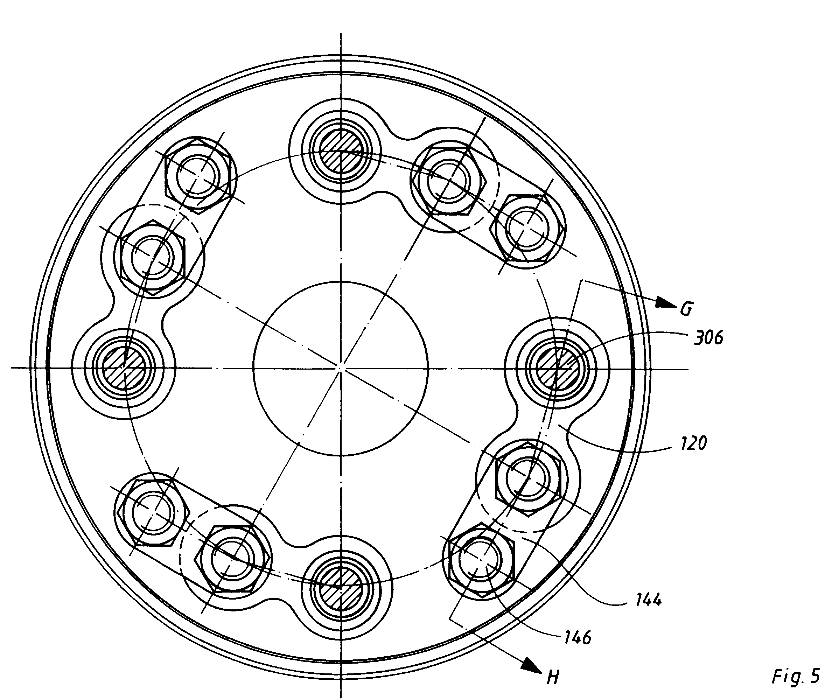

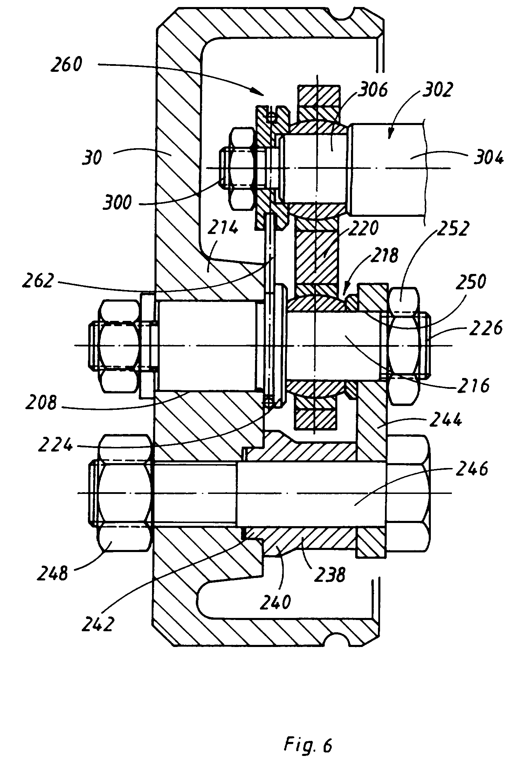

Bei der Ausführung nach Fig. 5 und 6 ist jedes Kugelgelenk 218 auf einem kupplungshälftenseitigen Ende oder Lagerzapfen 216 beidseitig abgestützt. Zu diesem Zweck ist neben dem Zapfenkörper 208 ein Abstandsstück 238 angeordnet. Das Abstandsstück 238 sitzt mit einem Fuss 240 auf der Stirnfläche der Verdickung 214 des Gehäuseteils 30 auf. Ein Zentriereinsatz 242 des Abstandsstückes 238 ragt in eine entsprechende Vertiefung der Verdickung 214. Auf dem Abstandsstück 238 liegt eine Lasche 244 auf. Die Lasche 244 und das Abstandsstück 238 werden durch einen dort hindurchgeführten Gewindebolzen 246 und eine Mutter 248 gegen den Gehäuseteil 30 festgezogen. Die Lasche 244 weist an ihrem freien Ende eine Bohrung 250 auf, welche das Ende 216 des Zapfenkörpers 208 aufnimmt. Die Lasche 244 ist durch eine Mutter 252, die auf den Gewindeansatz 226 aufgeschraubt ist, gegen den Innenring des Kugelgelenks 218 festgezogen und drückt diesen gegen den Bund 214.

Auf einem Gewindeansatz 300 des zwischengliedseitigen Zapfenkörpers 302 sitzt eine Scheibe 254 mit einer Umfangsnut 256. Die Scheibe 254 ist durch eine auf den Gewindeansatz 300 aufgeschraubte Mutter 258 gegen den Innenring des Kugelgelenks festgezogen und drückt diesen wiederum gegen die zwischen Mittelstück 304 und Ende 306 gebildete Ringschulter. Die entsprechenden Anordnungen an den anderen Zapfenkörpern sind damit übereinstimmend und daher nicht einzeln beschrieben.

In den Umfangsnuten 256 der Scheiben 254 und in den zwischen der Stirnfläche des Gehäuseteils 30 und dem Bund 224 gebildeten Rinne oder Umfangsnut liegen Bügel 262 aus Federstahldraht. Diese Bügel 262 sind jeweils "parallel" zu den Lenkern, z.B. 220, angeordnet und bewirken eine federnde Vorspannung zwischen den Lagerzapfen. Dadurch wird ein eventueller Verschleiss der Kugelgelenke und eine entsprechende Lose kompensiert.

## Patentansprüche

1. Homokinetische Kupplung zum Kuppeln umlaufender Teile, welche einen Winkel- und/oder Radialversatz zwischen den Umlaufachsen der Teile zuläßt, mit einer ersten und einer zweiten Kupplungshälfte (10,12) und zwei Zwischengliedern (14,16) zwischen den Kupplungshälften (10,12), welche mit den Kupplungshälften (10,12) über Lenkeranordnungen verbunden sind,
bei welcher jedes der Zwischenglieder (14,16) über ein erstes Paar von diametral gegenüberliegenden, allseits beweglich an Lagerzapfen (68,70) angelenkten Lenkern (86,90) mit der ersten Kupplungshälfte (10) und über ein zweites Paar von allseits beweglich an Lagerzapfen (68,70) angelenkten Lenkern (88,92) mit der zweiten Kupplungshälfte (12) verbunden ist, wobei jeweils der Lagerzapfen eine Lenkers des einen Paares mit dem Lagerzapfen des Lenkers des anderen Paares fluchtet,
bei welcher die beiden Zwischenglieder (14,16) gekreuzt zueinander angeordnet und über eine Zentrierkugel (58) aneinander zentriert sind und
bei welcher zwischen den beiden Zwischengliedern (14,16) Zugfedermittel wirksam sind, durch welche beide Zwischenglieder (14,16) in Anlage an der Zentrierkugel (58) gehalten werden,
**dadurch gekennzeichnet, daß**
(a) die Zentrierkugel (58) eine Querbohrung (142) aufweist,
(b) die Zugfedermittel von einer Zugfeder (152) gebildet sind, die sich durch die Querbohrung (142) erstreckt und auf einer Seite mit dem einen und auf der entgegengesetzten Seite mit dem anderen Zwischenglied (14,16) verbunden ist und
(c) die Lenker (86,88,90,92) an den Lagerzapfen (68,70) über metallische Gelenklager (84) angelenkt sind.

2. Homokinetische Kupplung nach Anspruch 1, **dadurch gekennzeichnet, daß**
(a) auf den zwischengliedseitigen Lagerzapfen (68) und den zugehörigen kupplungshälftenseitigen Lagerzapfen (170) mit einer Umfangsnut (176) versehene Rollen (172) sitzen, wobei die Umfangsnuten jeweils in einer Ebene liegen, und
(b) in den Umfangsnuten (176) jedes Paares von Rollen (172) eine geschlossene Federdrahtschleife (178) geführt ist.

3. Homokinetische Kupplung nach Anspruch 1 oder 2, **dadurch gekennzeichnet, daß**
(a) die beiden Kupplungshälften (10,12) je einen Nabenteil (18,32) und einen schalenförmigen Gehäuseteil (30,48) aufweisen,
(b) die beiden schalenförmigen Gehäuseteile (30,48) über eine flexible Manschette (50) miteinander verbunden sind und mit der Manschette (50) ein die Zwischenglieder (14,16) umgebendes Gehäuse (52) bilden.

4. Homokinetische Kupplung nach Anspruch 3, **dadurch gekennzeichnet, daß** das Gehäuse (52) wenigstens teilweise mit einem flüssigen Schmiermittel gefüllt ist.

5. Homokinetische Kupplung nach Anspruch 4, **dadurch gekennzeichnet, daß** in den Lenkern (86,88,90,92) Bohrungen (140) vorgesehen sind, welche in den sphärischen Lagerflächen der Gelenklager (84) enden.

6. Homokinetische Kupplung nach einem der Ansprüche 3 bis 5, **dadurch gekennzeichnet, daß**
(a) die auf fluchtenden Lagerzapfen (68,70) der Zwischenglieder (14,16) angelenkten Lenker (180,184;182,186) sich jeweils nach entgegengesetzten Richtungen erstrecken und
(b) die zugehörigen kupplungshälftenseitigen Lagerzapfen (170,192;190,194) der ersten bzw. der zweiten Kupplungshälfte (10,12) dementsprechend in Umfangsrichtung versetzt aber sich in Axialrichtung überlappend angeordnet sind.

7. Homokinetische Kupplung nach Anspruch 6, **dadurch gekennzeichnet, daß** die zwischengliedseitigen Lagerzapfen auf einem Teilkreis (198) angeordnet sind, dessen Durchmesser kleiner ist als der Durchmesser des Teilkreises (200), auf dem die kupplungshälftenseitigen Lagerzapfen angeordnet sind.

8. Homokinetische Kupplung nach Anspruch 7, **dadurch gekennzeichnet, daß** in einer Mittelstellung der Kupplung die auf fluchtenden Lagerzapfen angeordneten Lenker um 180° zueinander winkelversetzt sind und sich senkrecht zu der Radialmittelebene des jeweiligen Zwischengliedes erstrecken.

9. Homokinetische Kupplung nach einem der Ansprüche 1 bis 8, **dadurch gekennzeichnet, daß**
(a) in den Zwischengliedern (14,16) Bohrungen (144,146) vorgesehen sind, die in einer Mittelstellung der Kupplung mit der Querbohrung (142) der Zentrierkugel (58) fluchten,
(b) in diesen Bohrungen (144,146) der Zwischenglieder (14,16) Querstifte (148,150) sitzen, deren Achsen senkrecht zu den Achsen der Bohrungen (144,146) verlaufen, und
(c) die Zugfeder (152) an diese Querstifte (148,150) angehängt sind.

10. Homokinetische Kupplung nach einem der Ansprüche 1 bis 9, **dadurch gekennzeichnet, daß**
(a) die Zwischenglieder (14,16) langgestreckte Körper mit jeweils einer Kröpfung (54,56) in der Mitte sind.
(b) die Zwischenglieder (14,16) senkrecht zueinander angeordnet sind und mit ihren Kröpfungen (54,56) mit Spiel umeinandergreifen,
(c) die Zwischenglieder (14,16) auf der Innenseite der Kröpfungen (54,56) sphärische Ausnehmungen (60,62) aufweisen, welche die Zentrierkugel (58) umgreifen.

11. Homokinetische Kupplung nach Anspruch 4, **dadurch gekennzeichnet, dass**
(a) an dem Flanschteil (16) für jeden Lagerzapfen (116) eine Lasche (144) mittels eines Abstandsstücks (138) und eines sich durch die Lasche (144) und das Abstandsstück (138) erstreckenden Gewindebolzens (146) gehalten ist und
(b) das Ende des Lagerzapfens (116) in der Lasche (144) gehalten ist, wobei das Kugelgelenk (118) jeweils zwischen Flanschteil (16) und Lasche (144) angeordnet ist.

12. Homokinetische Kupplung nach Anspruch 11, **dadurch gekennzeichnet, dass** die durch Lenker (120) verbundenen Lagerzapfen (64) der Zwischenglieder (30, 32) bzw. der Kupplungshälften (10, 20) jeweils durch Federglieder (162) gegeneinander vorgespannt sind.

13. Homokinetische Kupplung nach Anspruch 12, **dadurch gekennzeichnet, dass** die Federglieder (162) von Bügeln aus Federstahldraht gebildet sind.

## Claims

1. Homokinetic coupling for coupling rotating members and permitting angular and/or radial offset between the rotational axes of the members, said coupling including a first coupling half and a second coupling half (10,12) and two intermediate members (14,16) arranged between the coupling halves (10,12) and connected thereto via link arrangemements,
wherein each one of the intermediate members (14,16) is connected to the first coupling half (10) through a first pair of diametrically opposed links (86,90) which are universally movably linked to respective bearing pins (68,70), and to the second coupling half (12) through a second pair of links (88,92) which are universally movably linked to respective bearing pins (68,70), the bearing pin of one link of pair being aligned to the bearing pin of the link of the respective other pair of link,
wherein the two intermediate members (14,16) are arranged crosswise relative to each other and centered relative to each other by means of a centering ball (58), and
wherein tension spring means are effective between the two intermediate members (14,16) for holding the two intermediate members (14,16) in engagement with the centering ball (58),
**characterised in that**
(a) the centering ball (58) comprises a transverse bore (142),
(b) the tension spring means are formed by a tension spring (152) which extends through the transverse bore (142) and which is connected on one side with the one intermediate member and on the opposite side with the other intermediate member (14,16), and
(c) the links (86,88,90,92) are linked to the respective bearing pins (68,70) through metallic rocker bearings (84).

2. Homokinetic coupling according to claim 1, **characterised in that**
(a) rollers (172) provided with respective circumferential grooves (176) are seated at the bearing pins on the side of the intermediate member and at the associated bearing pins (170) on the side of the coupling half, and
(b) a closed spring wire loop (178) being guided in the circumferential grooves (176) of each pair of rollers (172).

3. Homokinetic coupling according to claim 1 or 2, **characterised in that**
(a) the two coupling halves comprise respective hub members (18,32) and respective shell-shaped housing parts (30,48),
(b) the two shell-shaped housing parts (30,48) are interconnected by means of a flexible collar (50) and conjointly with said collar (50) form a housing (52) surrounding the intermediate members (14,16).

4. Homokinetic coupling according to claim 3, **characterised in that** the housing (52) is at least partially filled by a liquid lubricant.

5. Homokinetic coupling according to claim 4, **characterised in that** bores (140) are provided in the links (86,88,90,92) and terminate in the spherical bearing surfaces of the rocker bearings (84).

6. Homokinetic coupling according to any one of claims 3 to 5, **characterised in that**
(a) the links (180,184;182,186) which are linked to the aligned bearing pins (68,70) of the intermediate members (14,16), extend in opposite directions, and
(b) the associated bearing pins (170,192;190,194) on the side of the first and second coupling halves (10,12), respectively, are correspondingly arranged at a circumferential offset but at an overlap in the axial direction.

7. Homokinetic coupling according to claim 6, **characterised in that** the bearing pins on the side of the intermediate members are arranged along a circle (198) having a diameter which is smaller than the diameter of the circle (200) along which the bearing pins are arranged on the side of the coupling halves.

8. Homokinetic coupling according to claim 7, **characterised in that** the links which are arranged at the aligned bearing pins, are offset from each other by 180° and extend normally to the radial centre plane of the respective intermediate member in a neutral position of the coupling.

9. Homokinetic coupling according to any one of claims 1 to 8, **characterised in that**
(a) bores (144,146) are provided in the intermediate members (14,16) and aligned with the transverse bore (142) of the centering ball (58) in a neutral position of the coupling,
(b) transverse pins (148,150) are seated in respective ones of these bores (144,146) of the intermediate members (14,16) and have axes which extend normally to the axes of the respective bores (144,146), and
(c) the tension spring is appended from these transverse pins (148,150).

10. Homokinetic coupling according to any one of claims 1 to 9, **characterised in that**
(a) the intermediate members (14,16) are elongate bodies having respective central saddles (54,56).
(b) the intermediate members (14,16) are arranged normally relative to each other and extend around each other at a clearance with their saddles (54,56),
(c) the intermediate members (14,16) comprise spherical recesses (60,62) at the inner side of the respective saddles (54,56), which recesses extend around the centering ball (58).

11. Homokinetic coupling according to claim 4, **characterised in that**
(a) a bracket (144) is retained at the flange member (16) for each bearing pin (116) by means of a spacer member (138) and a threaded bolt (146) extending through the bracket (144) and the spacer member (138), and
(b) the end of the bearing pin (116) is retained in the bracket (144) whereby the ball-and-socket joint (118) is arranged between the flange member (16) and the bracket (144).

12. Homokinetic coupling according to claim 11, **characterised in that** the bearing pins (64) of the intermediate members (30,32) and the coupling halves (10,12), respectively, are connected by links (120) and biassed relative to each other by respective spring members (162).

13. Homokinetic coupling according to claim 12, **characterised in that** the spring members (162) are formed by brackets made of spring steel wire.

## Revendications

1. Dispositif d'accouplement homocinétique destiné à accoupler des éléments rotatifs qui admet un décalage angulaire et/ou radial entre les axes de rotation des éléments et qui est muni d'un premier et d'un second demi-accouplement (10,12) et de deux membres intermédiaires (14,16) entre les demi-accouplements (10,12) qui sont reliés aux demi-accouplements (10,12) par des dispositions de bielles,
dispositif pour lequel chacun des membres intermédiaires (14,16) est relié au premier demi-accouplement (10) par une première paire de bielles (86,90), articulées à des tourillons (68,70) de façon mobile de tous les côtés et opposées diamétralement, et au second demi-accouplement (12) par une seconde paire de bielles (88,92), articulées à des tourillons (68,70) de façon mobile de tous les côtés, le tourillon d'une bielle de la première paire s'alignant chaque fois sur le tourillon de la bielle de l'autre paire,
dispositif pour lequel les deux membres intermédiaires (14,16) sont disposés en croix l'un par rapport à l'autre et sont centrés l'un à l'autre par une bille de centrage (58) et
dispositif pour lequel des moyens de ressort de traction agissent entre les deux membres intermédiaires (14,16), moyens par lesquels les deux membres intermédiaires (14,16) sont tenus en appui à la bille de centrage (58),
**caractérisé par le fait que**
(a) la bille de centrage (58) présente un perçage transversal (142),
(b) les moyens de ressort de traction sont formés par un ressort de traction (152) qui s'étire à travers le perçage transversal (142) et qui est relié sur un côté au premier membre intermédiaire (14,16) et sur le côté opposé à l'autre et
(c) les bielles (86,88,90,92) sont articulées aux tourillons (68,70) par des paliers métalliques à articulation (84).

2. Dispositif d'accouplement homocinétique selon la revendication 1, **caractérisé par le fait que**
(a) des rouleaux (172) pourvus d'une rainure de circonférence (176) se trouvent sur les tourillons (68) situés du côté du membre intermédiaire et sur les tourillons (170) associés situés du côté du demi-accouplement, les rainures de circonférence se trouvant chaque fois dans un plan, et
(b) une boucle fermée en fil d'acier à ressort (178) est guidée dans les rainures de circonférence (176) de chaque paire de rouleaux (172).

3. Dispositif d'accouplement homocinétique selon la revendication 1 ou 2, **caractérisé par le fait que**
(a) les deux demi-accouplements (10,12) présentent chaque fois un élément de moyeu (18,32) et un élément de boîtier (30,48) en forme de cuvette,
(b) les deux éléments de boîtier (30,48) en forme de cuvette sont reliés l'un à l'autre par une manchette (50) flexible et forment avec la manchette (50) un boîtier (52) entourant les membres intermédiaires (14,16).

4. Dispositif d'accouplement homocinétique selon la revendication 3, **caractérisé par le fait que** le boîtier (52) est au moins rempli en partie d'un lubrifiant liquide.

5. Dispositif d'accouplement homocinétique selon la revendication 4, **caractérisé par le fait que** des perçages (140) aboutissant dans les surfaces sphériques de palier des paliers à articulation (84) sont prévus dans les bielles (86,88,90,92).

6. Dispositif d'accouplement homocinétique selon l'une des revendications 3 à 5, **caractérisé par le fait que**
(a) les bielles (180,184;182,186) articulées sur des tourillons (68,70) s'alignant des membres intermédiaires (14,16) s'étirent chaque fois dans des directions opposées et
(b) les tourillons (170,192;190,194) associés, situés du côté du demi-accouplement, du premier et du second demi-accouplement (10,12) respectivement sont décalés de façon correspondante en direction de la circonférence, mais sont disposés de façon à se chevaucher.

7. Dispositif d'accouplement homocinétique selon la revendication 6, **caractérisé par le fait que** les tourillons situés du côté du membre intermédiaire sont disposés sur un cercle gradué (198) dont le diamètre est inférieur au diamètre du cercle gradué (200) sur lequel les tourillons situés du côté du demi-accouplement sont disposés.

8. Dispositif d'accouplement homocinétique selon la revendication 7, **caractérisé par le fait que** dans une position médiane du dispositif d'accouplement les bielles disposées sur des tourillons s'alignant sont décalées d'un angle de 180° l'une par rapport à l'autre et s'étirent verticalement par rapport au plan médian radial du membre intermédiaire respectif.

9. Dispositif d'accouplement homocinétique selon l'une des revendications 1 à 8, **caractérisé par le fait que**
(a) des perçages (144,146) s'alignant dans une position médiane du dispositif d'accouplement sur le perçage transversal (142) de la bille de centrage (58) sont prévus dans les membres intermédiaires (14,16),
(b) des goupilles transversales (148,150) dont les axes s'étendent verticalement par rapport aux axes des perçages (144,146) se trouvent dans ces perçages (144,146) des membres intermédiaires (14,16), et
(c) le ressort de traction (152) est suspendu à ces goupilles transversales (148,150).

10. Dispositif d'accouplement homocinétique selon l'une des revendications 1 à 9, **caractérisé par le fait que**
(a) les membres intermédiaires (14,16) sont des corps étirés en longueur munis de chaque fois un coude (54,56) au milieu.
(b) les membres intermédiaires (14,16) sont disposés verticalement l'un par rapport à l'autre et s'enveloppent l'un l'autre avec du jeu avec leur coude (54,56),
(c) les membres intermédiaires (14,16) présentent sur le côté intérieur des coudes (54,56) des creux (60,62) sphériques qui enveloppent la bille de centrage (58).

11. Dispositif d'accouplement homocinétique selon la revendication 4, **caractérisé par le fait que**
(a) une éclisse (144) est maintenue à l'élément de bride (16) pour chaque tourillon (116) au moyen d'une entretoise (138) et d'un boulon fileté (146) s'étirant à travers l'éclisse (144) et l'entretoise (138) et
(b) l'extrémité du tourillon (116) est maintenue dans l'éclisse (144), l'articulation de bille (118) étant chaque fois disposée entre l'élément de bride (16) et l'éclisse (144).

12. Dispositif d'accouplement homocinétique selon la revendication 11, **caractérisé par le fait que** les tourillons (64), reliés par des bielles (120), des membres intermédiaires (30,32) et des demi-accouplements (10,20) respectivement sont chaque fois prétendus l'un contre l'autre par des membres à ressort (162).

13. Dispositif d'accouplement homocinétique selon la revendication 12, **caractérisé par le fait que** les membres à ressort (162) sont formés de pièces arquées en fil d'acier à ressort.
